# NEUE EUROPÄISCHE PATENTSCHRIFT

(11) **EP 1 384 002 B2**
(45) Veröffentlichungstag und Bekanntmachung des Hinweises auf die Entscheidung über den Einspruch: **18.08.2021**
(45) Hinweis auf die Patenterteilung: 22.09.2010
(21) Anmeldenummer: 02748656.2
(22) Anmeldetag: 12.04.2002
(51) Int. Cl.: F03D 9/00, F03D 7/02

(54) **VERFAHREN ZUM BETREIBEN EINER WINDENERGIEANLAGE**
METHOD FOR OPERATING A WIND ENERGY PLANT
PROCEDE D'EXPLOITATION D'UNE INSTALLATION D'ENERGIE EOLIENNE

(30) Priorität: 20.04.2001 DE 10119624; 04.08.2001 DE 10138399
(43) Veröffentlichungstag der Anmeldung: 28.01.2004
(60) Teilanmeldung: 04104405.8
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2002/004109
(87) Internationale Veröffentlichungsnummer: WO 2002/086314

(56) Entgegenhaltungen:
- WO-A-01/25630
- DE-U- 29 621 449
- US-A- 4 280 059
- US-A- 4 511 807
- US-A- 4 535 252

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an einen elektrischen Verbraucher, insbesondere ein elektrisches Netz.

Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei den bekannten Windenergieantagen zum Erzeugen elektrischer Energie aus Windenergie wird der Generator mit dem elektrischen Verbraucher, häufig einem elektrischen Netz, im Parallelbetrieb betrieben. D.h., so lange das Windangebot mit einer ausreicht, wird die Windenergieanlage elektrische Energie erzeugen und in das Netz einspeisen.

Aus WO 01/25630 ist ein Verfahren zum Betrieb eines Windparks bekannt, wobei die einzelnen Windenergieanlagen des Windparks einen Rotor aufweisen, der einen elektrischen Generator zum Abgeben elektrischer Leistung an einen elektrischen Verbraucher, insbesondere ein elektrisches Netz antreibt.

Die Windenergieanlage nach WO-A-9 311 604 wird durch eine Regelungseinrichtung gesteuert, die einen Stromaufnehmer zum Aufnehmen des an ein Netz abgegebenen Stromes aufweist.

Kommt es jedoch im Netz zu einer Störung, z.B. infolge eines Kurzschlusses im Netz, werden die Windenergieanlagen bislang von dem Netz getrennt und erst nach dem Wiederherstellen normaler Betriebsbedingungen an das Netz angeschaltet.

Dadurch ist ein rasches Stützen des Netzes nach dem Auftreten einer Störung, welches insbesondere bei großen Spannungs- bzw. Leistungsbedarfs-Schwankungen erforderlich ist, nicht mehr möglich.

Aufgabe der vorliegenden Erfindung ist es daher, eine Steuerung für eine oder mehrere Windenergieanlagen anzugeben, welche Schwankungen im Netz weitestmöglich entgegenwirkt.

Diese Aufgabe wird erfindungsgemäß mit einem Verfahren mit den Merkmalen nach Anspruch 1 sowie durch eine Windenergieanlage mit den Merkmalen nach den Ansprüchen 2-5 gelöst. Vorteilhafte Weiterbildungen sind in den Unteransprüchen beschrieben.

Nachfolgend wird eine Ausführungsform der Erfindung anhand der Figuren näher beschrieben. Dabei zeigen:
- Figur 1: eine in ein Netz einspeisende Windenergieanlage in einer vereinfachten Darstellung;
- Figur 2: eine erfindungsgemäße Regelungseinrichtung zum Betreiben einer Wind- energieanlage; und
- Figur 3: ein Blockschaltbild wesentlicher Bestandteile der Steuerungs- und Rege- lungsanordnung.

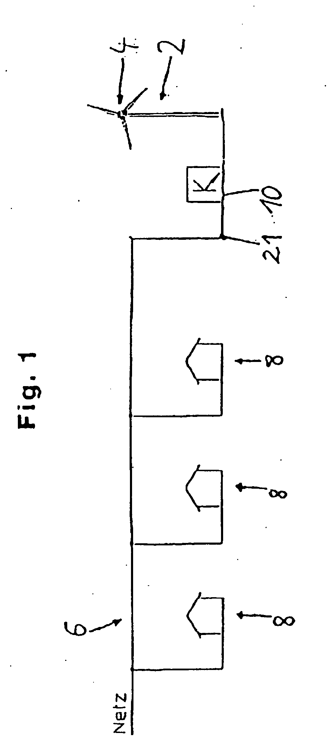

Eine in Figur 1 vereinfacht dargestellte Windenergieanlage 2 mit einem Rotor 4 ist mit einem elektrischen Netz 6 verbunden, das beispielsweise ein öffentliches Netz sein kann. An das Netz sind mehrere elektrische Verbraucher 8 angeschlossen. Der in Figur 1 nicht dargestellte elektrische Generator der Windenergieanlage 2 ist mit einer elektrischen Steuerungs- und Regelungs-Anordnung 10 gekoppelt, die den in dem Generator erzeugten Wechselstrom zunächst gleichrichtet und anschließend in einen Wechselstrom mit einer der Netzfrequenz entsprechenden Frequenz umwandelt. Anstelle eines Netzes 6 könnte auch ein einzelner Verbraucher von der Windenergieanlage 2 mit elektrischer Energie versorgt werden. Die Steuerungs- und Regelungsanordnung 10 weist eine erfindungsgemäße Regelungseinrichtung auf.

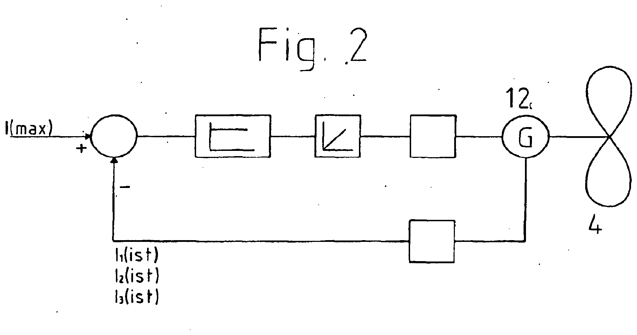

Figur 2 veranschaulicht die erfindungsgemäße Regelungseinrichtung. Der vereinfacht dargestellte Rotor 4 ist mit einem Generator 12 gekoppelt, der eine elektrische Leistung bereitstellt, die von der Windgeschwindigkeit und somit der Windleistung abhängt. Der in dem Generator 12 erzeugte Wechselstrom wird zunächst gleichgerichtet und anschließend in einen Wechselstrom umgewandelt, der eine der Netzfrequenz entsprechende Frequenz aufweist.

Mit Hilfe eines Stromaufnehmers (nicht dargestellt) wird der in das Netz 6 (Figur 1) eingespeiste Strom ermittelt. Dabei wird der Strom mit einem vorgegebenen Wert I(max) verglichen.

Überschreitet nun der in das Netz 6 eingespeiste Strom den vorgegebenen Maximalwert I(max), wird durch die Regelungseinrichtung die von der gesamten Windenergieanlage (und/oder deren Generator) erzeugte Leistung so eingestellt, dass der eingespeiste Strom den vorgegebenen Grenzwert I(max) nicht überschreitet. Bei einem Kurzschluss kann dies beispielsweise dadurch geschehen, dass die Windenergieanlage eine deutlich geringere Leistung als zuvor in das Netz einspeist, die damit nicht ins Netz eingespeiste Leistung aber anderweitig außerhalb des Netzes einsetzt, beispielsweise für einen Dumpload (Widerstand) oder die Einspeisung der nicht in das Netz abgegebenen Leistung in Kondensatoren oder andere Zwischenspeicher. Sobald das Netz dann wieder vollständig zur Verfügung steht, kann auch die gespeicherte Energie ins Netz wieder abgegeben werden.

Auf diese Weise kann selbst bei einem Kurzschluss im Netz die Windenergieanlage weiterhin Leistung an das Netz abgeben und das Netz stützen, ohne dass in Folge des Kurzschlusses der Strom den vorgegebenen Grenzwert überschreitet.

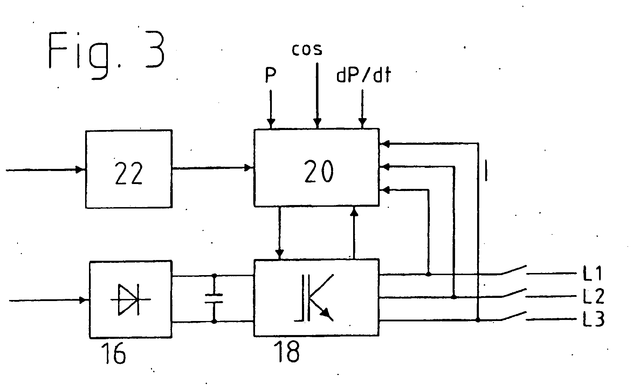

Figur 3 zeigt Bestandteile der Steuerungs- und Regelungsanordnung 10 in Figur 1. Die Steuerungs- und Regelungsanordnung 10 weist einen Gleichrichter 16 auf, in dem der von dem Generator erzeugte Wechselstrom gleichgerichtet wird. Ein mit dem Gleichrichter 16 verbundener Wechselrichter 18 wandelt den Gleichstrom wiederum in einen Wechselstrom um, der eine der Netzfrequenz entsprechende Frequenz aufweist. Dieser Strom wird über drei Phasen L1, L2 und L3 in das Netz 6 eingespeist. Der Wechselrichter 18 wird mit Hilfe eines Mikrocomputers 20, der Teil der Regelungseinrichtung ist, gesteuert. Dazu ist der Mikroprozessor 20 mit dem Wechselrichter 18 gekoppelt. Als Eingangsgrößen für die Regelung des Stromes, mit dem die von der Windenergieanlage 2 zur Verfügung gestellte elektrische Leistung in das Netz 6 eingespeist wird, sind der aktuelle Strom bzw. die aktuellen Ströme, die Netzfrequenz, die elektrische Leistung P des Generators, der Leistungsfaktor cos_ sowie der Leistungsgradient dP/dt vorgesehen. In dem Mikroprozessor 20 wird die erfindungsgemäße Regelung des einzuspeisenden Stromes verwirklicht. Dabei wird der Strom auf jeder der Phasen L1, L2 und L3 separat erfasst und mit seinem Betrag in der erfindungsgemäßen Regelung berücksichtigt.

Steigt nunmehr der gemessene Strom(betrag) I(ist) einer Phase über einen vorbestimmten Maximalwert an, wird der Wechselrichter 18 so gesteuert, dass der Strom(betrag) unter den vorgegebenen Maximalstroms I(max) sinkt und die dann erzeugte elektrische Energie aus Windenergie, die aufgrund der Strombegrenzung nicht ins Netz eingespeist wird, wird anderweitig verwendet, beispielsweise über einen Widerstand (Dumpload) gegeben oder in einem Zwischenspeicher (z.B. Kondensator, Ultracap) gespeichert.

Dabei kann die Steuerung der Windenergieanlage selbsttätig arbeiten. Die Windenergieanlage erfasst dann einen Kurzschluss im Netz z.B. durch die Überwachung der Spannungen der einzelnen Phasen des Netzes und/oder deren Phasenlage. Werden für Spannungen und/oder Phasendifferenzen vorgebbare Grenzwerte erreicht, erkennt die Windenergieanlage einen Kurzschluss und arbeitet nach einem für diesen Fall vorgesehen Algorithmus.

Durch den externen Zugang (22) ergibt sich, z.B. für das Energieversorgungsunternehmen, an dessen Netz die Windenergieanlage angeschlossen ist, die Möglichkeit besteht, in den Betrieb der Windenergieanlage einzugreifen und beispielsweise den Betrag des einzuspeisenden Stromes, die Art des Stromes (Wirkstrom, Blindstrom) und/oder den Phasenwinkel und/oder Phasenlage usw. zu verändern. Auf diese Weise kann das Energieversorgungsuntemehmen genau diejenigen Werte (den Strom, die Spannung, die elektrische Leistung) für die von der Windenergieanlage in das Netz einzuspeisende Leistung einstellen, die dem Bedarf des Netzbetreibers entsprechen.

## Patentansprüche

1. Verfahren zum Betreiben einer Windenergieanlage mit einem von einem Rotor antreibbaren elektrischen Generator zum Abgeben elektrischer Leistung an einen elektrischen Verbraucher, nämlich an ein elektrisches Netz, wobei die Windenergieanlage eine Vorrichtung zur Erfassung eines Kurzschlusses im Netz aufweist, wobei im Falle eines Kurzschlusses im Netz oder im Falle einer vergleichbaren Betriebsstörung, bei der die Netzspannung einen Wert annimmt, der mehr als 20% vom Sollwert abweicht, die Windenergieanlage mittels einer Regelungseinrichtung derart gesteuert wird, dass die Windenergieanlage weiter elektrische Leistung an das Netz abgibt und das Netz stützt, ohne dass in Folge des Kurzschlusses oder der Betriebsstörung der von dem Generator in das Netz eingespeiste Strom einen vorgegebenen Grenzwert überschreitet, und die Regelungseinrichtung einen Stromaufnehmer zum Aufnehmen des an das Netz abgegebenen elektrischen Stromes aufweist, so dass die von dem Generator an das Netz abgegebene Leistung in Abhängigkeit von dem durch den Stromaufnehmer aufgenommenen Strom geregelt wird.

2. Windenergieanlage mit einem Rotor und einem mit dem Rotor gekoppelten elektrischen Generator zum Abgeben elektrischer Leistung an ein elektrisches Netz,
**dadurch gekennzeichnet, dass** die Windenergieanlage eine Vorrichtung zur Erfassung eines Kurzschlusses im Netz aufweist und die Windenergieanlage am Netz bleibt, wenn sich im Netz ein Kurzschluss oder eine vergleichbare Betriebsstörung einstellt, beispielsweise die Spannung einen Wert annimmt, der mehr als 20% vom Sollwert abweicht und die Windenergieanlage mittels einer Regelungseinrichtung derart gesteuert wird, dass die Windenergieanlage weiter elektrische Leistung an das Netz abgibt und das Netz stützt, ohne dass in Folge des Kurzschlusses oder der Betriebsstörung der von dem Generator in das Netz eingespeiste Strom einen vorgegebenen Grenzwert überschreitet und die Regelungseinrichtung einen Stromaufnehmer zum Aufnehmen des in das Netz abgegebenen elektrischen Stromes aufweist, so dass die von dem Generator an das Netz abgegebene Leistung in Abhängigkeit von dem durch den Stromaufnehmer aufgenommenen Strom regelbar ist.

3. Windenergieanlage nach Anspruch 2,
**gekennzeichnet durch** einen externen Steuerungseingang (22) zur Übergabe von Daten an die Regelungseinrichtung.

4. Windenergieanlage nach einem der Ansprüche 2 oder 3,
**dadurch gekennzeichnet, dass** die Regelungseinrichtung einen Mikroprozessor aufweist.

5. Windenergieanlage nach einem der Ansprüche 2 bis 4,
**dadurch gekennzeichnet, dass** die Windenergieanlage einen externen Steuereingang zur Übergabe von Daten an eine Regelungseinrichtung der Wind- energieanlage aufweist, dass über den externen Steuereingang Schaltbefehle vom Netzbetreiber oder Energieversorger, der das Nezt betreibt, empfangbar sind und in Abhängigkeit dieser Steuersignale vom Netzbetreibers gesteuert wird und somit elektrische Leistung, beispielsweise die Wirkleistung, Stromlage, Spannungslage oder Phasenlage in einer Form in das Netz eingespeist wird, wie dies vom Netzbetreiber erfordert wird.

## Claims

1. Method for operation of a wind energy installation having an electrical generator, which can be driven by a rotor, for emission of electrical power to an electrical load, namely to an electrical grid, wherein the wind energy installation has an apparatus for detection of a short circuit in the grid, wherein, in the event of a short circuit in the grid or in the event of a comparable disturbance in operation, during which the grid voltage assumes a value which differs by more than 20% from the nominal value, the wind energy installation is controlled by means of a closed-loop control device such that the wind energy installation still emits electrical power to the grid, and supports the grid, without the current which is fed into the grid from the generator exceeding a predetermined limit value as a consequence of the short circuit or the disturbance in operation, and wherein the closed-loop control device has a current sensor for sensing the electric current emitted to the grid, such that the power which is emitted to the grid from the generator is controlled as a function of the current sensed by the current sensor.

2. Wind energy installation having a rotor and an electric generator coupled to the rotor for emission of electrical power to an electrical grid, **characterized in that** the wind energy installation has an apparatus for detection of a short circuit in the grid, and the wind energy installation remains connected to the grid when a short circuit or a comparable disturbance in operation occurs in the grid, for example if the voltage assumes a value which differs by more than 20% from the nominal value, and the wind energy installation is controlled by means of a closed-loop control device such that the wind energy installation still emits electrical power to the grid, and supports the grid, without the current which is fed into the grid from the generator exceeding a predetermined limit value as a consequence of the short circuit or the disturbance in operation, and wherein the closed-loop control device has a current sensor for sensing the electric current emitted to the grid, such that the power which is emitted to the grid from the generator can be controlled as a function of the current sensed by the current sensor.

3. Wind energy installation according to Claim 2, **characterized by** an external control input (22) for transferring data to the control device.

4. Wind energy installation according to either of Claims 2 and 3,
**characterized in that** the control device has a microprocessor.

5. Wind energy installation according to one of Claims 2 to 4,
**characterized in that** the wind energy installation has an external control input for transferring data to a control device for the wind energy installation, **in that** switching commands from the grid operator or power supply authority who is operating the grid can be received via the external control input and the wind energy installation is controlled in accordance with the grid operator's requirement as a function of these control signals from the grid operator, so that electrical power, for example the real power, current level, voltage level or phase angle, are fed into the grid in a form as required by the grid operator.

## Revendications

1. Procédé pour faire fonctionner une éolienne avec un générateur électrique pouvant être entraîné par un rotor pour distribuer de la puissance électrique à un consommateur électrique, à savoir à un réseau électrique, dans lequel l'éolienne présente un dispositif pour détecter un court-circuit dans le réseau, dans lequel, dans le cas d'un court-circuit dans le réseau ou dans le cas d'un dysfonctionnement comparable, dans lequel la tension de réseau adopte une valeur qui diverge de plus de 20 % de la valeur théorique, l'éolienne est commandée au moyen d'un système de régulation de telle manière que l'éolienne distribue par ailleurs de la puissance électrique au réseau et soutient le réseau sans que, suite au court-circuit ou au dysfonctionnement, le courant injecté par le générateur dans le réseau ne dépasse une valeur limite prédéfinie, et le système de régulation présente un capteur de courant pour capter le courant électrique distribué au réseau de telle sorte que la puissance distribuée par le générateur au réseau est régulée en fonction du courant capté par le capteur de courant.

2. Eolienne avec un rotor et un générateur électrique couplé au rotor pour distribuer une puissance électrique à un réseau électrique,
**caractérisée en ce que** l'éolienne présente un dispositif pour détecter un court-circuit dans le réseau et l'éolienne reste sur le réseau quand un court-circuit ou un dysfonctionnement comparable s'ajuste dans le réseau, par exemple la tension adopte une valeur qui diverge de plus de 20 % de la valeur théorique et l'éolienne est commandée au moyen d'un système de régulation de telle manière que l'éolienne distribue par ailleurs une puissance électrique au réseau et soutient le réseau sans que suite au court-circuit ou au dysfonctionnement, le courant injecté par le générateur dans le réseau ne dépasse une valeur limite prédéfinie et le système de régulation présente un capteur de courant pour capter le courant électrique distribué dans le réseau de sorte que la puissance distribuée par le générateur au réseau peut être régulée en fonction du courant capté par le capteur de courant.

3. Eolienne selon la revendication 2,
**caractérisée par** une entrée de commande (22) externe pour transférer des données au système de régulation.

4. Eolienne selon l'une quelconque des revendications 2 ou 3,
**caractérisée en ce que** le système de régulation présente un microprocesseur.

5. Eolienne selon l'une quelconque des revendications 2 à 4,
**caractérisée en ce que** l'éolienne présente une entrée de commande externe pour transférer des données à un système de régulation de l'éolienne, que des instructions de commutation peuvent être reçues par l'intermédiaire de l'entrée de commande externe par l'exploitant du réseau ou le fournisseur d'énergie, qui exploite le réseau et l'éolienne est commandée en fonction de ces signaux de commande par l'exploitant du réseau selon les besoins de l'exploitant du réseau et ainsi une puissance électrique, par exemple la puissance active, la position de courant, la position de tension ou la position de phase, est injectée en une forme dans le réseau tel que cela est requis par l'exploitant du réseau.
